# EUROPÄISCHE PATENTSCHRIFT

(11) **EP 1 582 389 B1**
(45) Veröffentlichungstag und Bekanntmachung des Hinweises auf die Patenterteilung: **05.09.2007**
(21) Anmeldenummer: 05102335.6
(22) Anmeldetag: 23.03.2005
(51) Int. Cl.: B60K 17/10, B60K 28/16, B60K 17/356, B60W 10/10, B60W 10/18, F16H 61/42

(54) **Antriebssystem eines Arbeitsfahrzeugs**
Drive for a working vehicle
Entraînement pour véhicule de travail

(30) Priorität: 02.04.2004 DE 102004016242
(43) Veröffentlichungstag der Anmeldung: 05.10.2005
(60) Teilanmeldung: 06123361.5
(73) Patentinhaber: DEERE & COMPANY, Moline, Illinois 61265-8098 (US)
(72) Erfinder: Hofer, Jürgen, 66501, Grossbundenbach (DE)
(74) Vertreter: Holst, Sönke

(56) Entgegenhaltungen:
- EP-A- 0 653 324
- EP-A- 1 223 069
- EP-B- 0 706 466
- DE-A- 2 947 552
- DE-A- 3 209 071
- DE-A- 19 607 048
- DE-A- 19 956 469
- US-A- 4 301 901
- US-A- 5 924 509
- US-B1- 6 321 866

## Beschreibung

Die Erfindung betrifft ein Antriebssystem eines Arbeitsfahrzeugs, mit einem Hauptmotor, der mit einer Hydraulikpumpe in Antriebsverbindung steht, die ein mittels eines Aktors veränderbares Verdrängungsvolumen aufweist und mit einem ersten Hydraulikmotor, der mit wenigstens einem im Eingriff mit dem Erdboden befindlichen Rad in Antriebsverbindung steht und dessen Verdrängungsvolumen durch einen Aktor veränderbar ist, und mit einem zweiten Hydraulikmotor verbunden ist, der mit wenigstens einem im Eingriff mit dem Erdboden befindlichen Rad einer anderen Achse in Antriebsverbindung steht und dessen Verdrängungsvolumen durch einen Aktor veränderbar ist, wobei die Aktoren mit einer Steuerungseinrichtung verbunden sind, die auch mit einem Sensor zur Erfassung der Position einer Geschwindigkeitsvorgabeeinrichtung, insbesondere eines Fahrhebels, verbunden ist, und die Steuerungseinrichtung betreibbar ist, die Aktoren entsprechend einer Geschwindigkeitsvorgabe der Geschwindigkeitsvorgabeeinrichtung einzustellen und bei einer erkannten unerwünschten Betriebsbedingung an mindestens einem der Räder den dem jeweiligen Rad zugeordneten Aktor in Richtung verminderten Verdrängungsvolumens des Hydraulikmotors zu verstellen, um die Betriebsbedingung durch Verminderung der Drehzahl des Rads aufzuheben und zusätzlich den Aktor des jeweils anderen Hydraulikmotors und/oder den Aktor der Hydraulikpumpe zum Konstanthalten der Fahrgeschwindigkeit zu verstellen.

Bei vielen Arbeitsfahrzeugen, wie landwirtschaftlichen Fahrzeugen und Erntemaschinen, werden hydraulische Antriebe eingesetzt. Sie umfassen eine durch einen Verbrennungsmotor angetriebene Pumpe und einen mit der Pumpe hydraulikflüssigkeitsleitend verbundenen Hydraulikmotor, der ein Rad oder mehrere Räder antreibt. Bei manchen Fahrzeugen werden Räder der Vorder- und Hinterachse durch jeweils mindestens einen, den Achsen zugeordneten Hydraulikmotor angetrieben. Diese Hydraulikmotore sind oftmals mit verstellbarem Verdrängungsvolumen ausgestattet, wie auch die zugehörige Hydraulikpumpe.

Ein derartiges Fahrzeug nach dem Oberbegriff des Anspruchs 1 ist in der EP 1 223 069 A offenbart. Ein Verbrennungsmotor treibt die verstellbare Hydraulikpumpe an, die hydraulikfluidleitend mit den verstellbaren Hydraulikmotoren verbunden ist, die jeweils zum Antrieb einer Achse dienen. Die Drehzahl der Motore und der Druck an ihrem Ein- und Auslass wird gemessen. Eine elektronische Steuereinheit ist mit einem Fahrhebel verbunden und steuert die Taumelscheiben der Hydraulikmotoren und der Hydraulikpumpe. Gemäß dieser Druckschrift werden die Schwenkwinkel der Hydraulikpumpe und der Hydraulikmotore entsprechend der Geschwindigkeitsvorgabe des Fahrhebels eingestellt. Falls die Drehzahlen der Achsen voneinander abweichen, was auf Schlupf hindeutet, wird jeweils der Hydraulikmotor, an dem Schlupf auftritt, verstellt. Der andere Hydraulikmotor und die Hydraulikpumpe werden zum Konstanthalten der Fahrgeschwindigkeit entsprechend geregelt. Die Ansteuerung der Hydraulikpumpe wird nicht näher beschrieben.

Das der Erfindung zu Grunde liegende Problem wird darin gesehen, ein Antriebssystem eines Arbeitsfahrzeugs bereitzustellen, bei dem eine verbesserte Ansteuerung der Hydraulikpumpe und der Hydraulikmotore stattfindet. Weiterhin soll eine verbesserte Bremswirkung ermöglicht werden.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das Antriebssystem des Arbeitsfahrzeugs, bei dem es sich insbesondere um eine selbstfahrende Erntemaschine handeln kann, umfasst einen Hauptmotor, der in der Regel ein Verbrennungsmotor ist. Der Hauptmotor treibt eine Hydraulikpumpe direkt oder indirekt, d.h. über dazwischen geschaltete mechanische, hydraulische oder beliebige andere Getriebe an. Die Hydraulikpumpe steht über eine Hydraulikleitung mit zwei Hydraulikmotoren in Verbindung, die jeweils mindestens ein im Eingriff mit dem Erdboden befindliches Rad - oder eine Gleiskette - mechanisch antreiben. Die Hydraulikmotoren sind unterschiedlichen Achsen des Arbeitsfahrzeugs zugeordnet. Eine Steuerungseinrichtung ist mit einem Sensor verbunden, der die Position einer Geschwindigkeitseingabeeinrichtung erfasst, z. B. eines Fahrhebels oder eines Gaspedals. Die Steuerungseinrichtung ist außerdem mit drei Aktoren verbunden, die das Verdrängungsvolumen des ersten Hydraulikmotors, des zweiten Hydraulikmotors und der Hydraulikpumpe verstellen.

Im normalen Betrieb verstellt die Steuerungseinrichtung die Aktoren in Positionen, die dazu führen, dass das Arbeitsfahrzeug mit einer Geschwindigkeit fortbewegt wird, die durch einen Bediener mittels der Geschwindigkeitseingabeeinrichtung vorgegeben wird.

Die Betriebsbedingungen zumindest eines Rads werden überwacht. Tritt eine unerwünschte Betriebsbedingung auf, z. B. Schlupf, der anhand der Drehzahlen der Räder erkannt werden kann, oder eine Bremswirkung des Rads, die anhand eines Druckunterschieds zwischen dem Einlass und dem Auslass des Hydraulikmotors erkannt werden kann, wird das Verdrängungsvolumen des betreffenden Hydraulikmotors vermindert. Gleichzeitig ist zu verhindern, dass die Fahrgeschwindigkeit sich ändert. Es wird daher vorgeschlagen, in einem derartigen Fall zunächst das Verdrängungsvolumen des jeweils anderen, nicht von der unerwünschten Betriebsbedingung betroffenen Hydraulikmotors zu erhöhen, wenn erforderlich, bis zum maximalen Verdrängungsvolumen. Nur, wenn diese Erhöhung nicht ausreicht, um die Geschwindigkeit des Arbeitsfahrzeugs konstant zu halten, indem der andere Hydraulikmotor das gesamte, durch die Verstellung des von der unerwünschten Betriebsbedingung betroffenen Hydraulikmotors freiwerdende Volumen aufnimmt, wird das Verdrängungsvolumen der Hydraulikpumpe vermindert.

Auf diese Weise erhält man ein relativ einfaches, zweckmäßiges Vorgehen der Steuerungseinrichtung im Fall einer unerwünschten Betriebsbedingung.

Zusätzlich wird vorgeschlagen, die Steuerungseinrichtung des Antriebssystems des Arbeitsfahrzeugs, das insbesondere eine selbstfahrende Erntemaschine sein kann, mit einem Parkbremsenaktor zu verbinden. Falls die Geschwindigkeitsvorgabeeinrichtung relativ schnell, d. h. mit einer einen festgelegten Schwellenwert überschreitenden Geschwindigkeit, in Richtung auf die Neutralstellung bewegt wird, dient die Parkbremse als zusätzliche Bremse, um die Bremswirkung des Hydraulikmotors oder der Hydraulikmotore zu verstärken. Im Falle einer Notbremsung wird somit ein schnelleres Anhalten der Arbeitsmaschine möglich. Die Ansteuerung des Parkbremsaktors kann über ein Proportionalventil erfolgen, um auch Zwischenwerte der Verzögerung zu ermöglichen.

In den Zeichnungen ist ein nachfolgend näher beschriebenes Ausführungsbeispiel der Erfindung dargestellt. Es zeigt:
- Fig. 1: ein Schema eines erfindungsgemäßen Antriebssystems,
- Fig. 2: ein Flussdiagramm, gemäß dem die Steuerungs-einrichtung bei Auftreten von Schlupf vorgeht, und
- Fig. 3: ein Flussdiagramm, gemäß dem die Steuerungs-einrichtung bei Auftreten einer Bremswirkung der hinteren Räder vorgeht.

### Aufbau des Antriebssystems

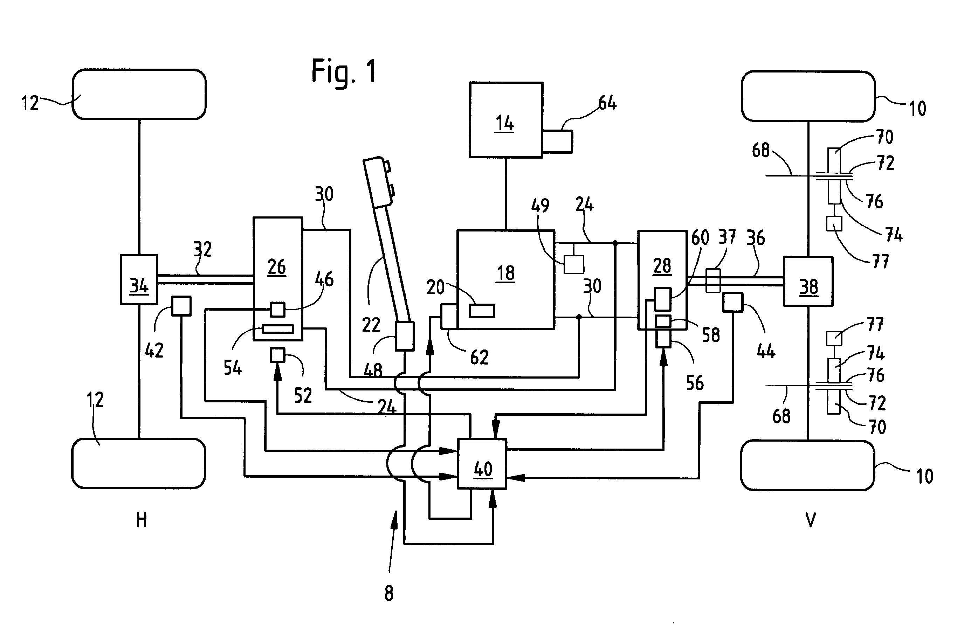

In der Figur 1 ist eine Ausführungsform eines erfindungsgemäßen Antriebssystems schematisch dargestellt. Ein Arbeitsfahrzeug 8 weist einen (nicht dargestellten) Rahmen oder ein selbsttragendes Chassis auf, der sich auf vorderen Rädern 10 und hinteren Rädern 12 abstützt, die sich im Eingriff mit dem Erdboden befinden. Die hinteren Räder 12 sind in der Regel lenkbar, während die vorderen Räder 10 größeren Durchmessers als die hinteren Räder 10 sind und den größeren Teil des Gewichts des Arbeitsfahrzeugs 8 abstützen, insbesondere wenn es sich um eine Erntemaschine in Form eines Mähdreschers, Baumwollpflückers oder selbstfahrenden Feldhäckslers handelt. Die vorderen Räder 10 sind somit traktionsunkritischer als die hinteren Räder 12. Bei anderen Ausführungsformen von Arbeitsmaschinen, beispielsweise Traktoren oder Zuckerrohrerntern mit lenkbaren vorderen Rädern, könnten die Positionen der hinteren und vorderen Räder 12, 10 vertauscht sein.

Das Antriebssystem umfasst einen Hauptmotor 14 in Form eines Verbrennungsmotors (Dieselmotor). Über eine Welle 16 treibt der Hauptmotor 14 eine Hydraulikpumpe 18 an, deren Fluidverdrängung durch eine Taumelplatte 20 veränderbar ist. Deren Position ist durch einen Fahrhebel 22 veränderbar, welcher sich in einer Fahrerkabine des Arbeitsfahrzeugs 8 befindet. Die Hydraulikpumpe 18 weist einen Auslass auf, der durch Leitungen 24 mit dem Einlass eines ersten Hydraulikmotors 26 und dem Einlass eines zweiten Hydraulikmotors 28 verbunden ist. Ein Einlass der Hydraulikpumpe 18 ist über Leitungen 30 mit dem Auslass des ersten Hydraulikmotors 26 und dem Auslass des zweiten Hydraulikmotors 28 verbunden. Der Hauptmotor 14 treibt, falls das Arbeitsfahrzeug 8 eine selbstfahrende Erntemaschine ist, auch deren Gutbearbeitungs- bzw. Fördereinrichtungen an.

Der erste Hydraulikmotor 26 treibt über eine erste Antriebswelle 32 und ein erstes selbstsperrendes Differenzialgetriebe 34 die beiden hinteren Räder 12 an. Der zweite Hydraulikmotor 28 treibt über eine zweite Antriebswelle 36 und ein zweites selbstsperrendes Differenzialgetriebe 38 die beiden vorderen Räder 10 an. Der erste Hydraulikmotor 26 kann wahlweise ein- und ausschaltbar sein, so dass ein Vierradantrieb nur in besonderen Betriebssituationen auswählbar ist, in denen ein besseres Traktionsvermögen benötigt wird.

Zwischen dem zweiten Hydraulikmotor 28 und dem zweiten Differenzialgetriebe 38 ist ein Schaltgetriebe 37 mit unterschiedlichen, wählbaren Übersetzungsstufen vorhanden. Die Übersetzungsstufe des Schaltgetriebes 37 kann - vorzugsweise auch während der Fahrt - manuell auf mechanische oder elektromechanische bzw. elektrohydraulische Weise geändert werden. Alternativ findet eine selbsttätige Umschaltung der Übersetzungsstufe des Getriebes statt, wie sie in der EP1431619 A (stand der Technik nach Art54(3)EPÜ) beschrieben wird.

Zum Rückwärtsfahren werden durch eine entsprechende Einstellung der Taumelplatte 20 der Hydraulikpumpe 18 die Flussrichtungen in den Leitungen 24 und 30 umgekehrt.

### Steuerungseinrichtung

Eine Steuerungseinrichtung 40 ist mit einem ersten Drehzahlsensor 42, einem zweiten Drehzahlsensor 44 und einem ersten Drucksensor 46 verbunden. Der erste Drehzahlsensor 42 ist der ersten Antriebswelle 32 benachbart angeordnet und gibt bei jeder Umdrehung (oder mehrmals während einer Umdrehung) der ersten Antriebswelle 32 einen Impuls ab. Der zweite Drehzahlsensor 44 ist an der zweiten Antriebswelle 36 ausgangsseitig des Schaltgetriebes 37 angebracht und gibt bei jeder Umdrehung (oder mehrmals während einer Umdrehung) der zweiten Antriebswelle 36 einen Impuls ab. Der Drucksensor 46 ist im Innenraum des ersten Hydraulikmotors 26 angeordnet und erfasst den Druck, der am Auslass des ersten Hydraulikmotors 26 anliegt.

Die Steuerungseinrichtung 40 ist weiterhin mit einem elektromechanischen Aktor 52 verbunden, der zur Verstellung einer Taumelplatte 54 des ersten Hydraulikmotors 26 eingerichtet ist. Eine Information über die Stellung des Aktors 52 kann an die Steuerungseinrichtung 40 zurückgekoppelt werden. Findet ein Schrittmotor als Aktor 52 Verwendung, erübrigt sich diese Rückkopplung.

Auch der zweite Hydraulikmotor 28 weist eine durch einen elektromechanischen Aktor 56 und eine verstellbare Taumelplatte 58 veränderbare Fluidverdrängung auf. Eine Information über die Stellung des Aktors 56 kann an die Steuerungseinrichtung 40 zurückgekoppelt werden. Dem zweiten Hydraulikmotor 28 ist ein zweiter Drucksensor 60 zugeordnet, der den Druck am Auslass des zweiten Hydraulikmotors 28 misst. Die Steuerungseinrichtung 40 ist mit dem Drucksensor 60 und dem Aktor 56 verbunden.

Weiterhin ist ein dritter Aktor 62 zur Verstellung der Position der Taumelplatte 20 der Hydraulikpumpe 18 vorgesehen, der elektromechanisch oder elektrohydraulisch arbeitet und durch die Steuerungseinrichtung 40 gesteuert wird. Es ist denkbar, der Steuerungseinrichtung 40 zusätzlich eine Information über die jeweilige Stellung des dritten Aktors 62 zuzuführen.

Ein als Geschwindigkeitsvorgabeeinrichtung dienender Fahrhebelstellungssensor 48 ist dem Fahrhebel 22 zugeordnet. Der Fahrhebelstellungssensor 48 erfasst die aktuelle Stellung des Fahrhebels 22 optisch oder magnetisch und übermittelt sie an die Steuerungseinrichtung 40.

Die Steuerungseinrichtung 40 steuert die Aktoren 52, 56 und 62 in Normalbetrieb derart in an sich bekannter Weise an, dass sich das Arbeitsfahrzeug 8 mit einer Geschwindigkeit bewegt, die der Vorgabe durch den Fahrhebel 22 entspricht. Dabei kann das Verdrängungsvolumen der Taumelplatte 20 der Hydraulikpumpe 18 beispielsweise bis zu einer bestimmten Grenzgeschwindigkeit proportional zur Vorgabe der Vortriebsgeschwindigkeit eingestellt werden, während die Verdrängungsvolumina der Taumelplatten 54, 58 der Hydraulikmotore 26, 28 bei Geschwindigkeiten unter der Grenzgeschwindigkeit auf ihren Maximalwert gestellt werden und, sobald das Verdrängungsvolumen der Taumelplatte 20 der Hydraulikpumpe 18 bei der Grenzgeschwindigkeit sein Maximum erreicht hat, bei dem das Verdrängungsvolumen der Taumelplatte 20 der Hydraulikpumpe 18 bei höheren Geschwindigkeiten auch bleibt, in einem Maße reduziert werden, das zur Erreichung der gewünschten Geschwindigkeit führt. Der Wert der Grenzgeschwindigkeit hängt von der jeweils gewählten Übersetzungsstufe des Getriebes 37 ab.

Die Steuerungseinrichtung 40 erhält vom zweiten Drehzahlsensor 44 einen Messwert hinsichtlich der Drehzahl der vorderen Räder 10. Außerdem erhält die Steuerungseinrichtung 40 vom ersten Drehzahlsensor 42 eine Information über die Drehzahl der hinteren Räder 12. Weiterhin liegen der Steuerungseinrichtung 40 Informationen hinsichtlich der Übersetzungsverhältnisse zwischen den Wellen 32, 36, mit denen die Drehzahlsensoren 42, 44 zusammenwirken, und den Rädern 10, 12 sowie hinsichtlich der äußeren Durchmesser der Räder 10, 12 vor.

### Vorgehen bei Schlupf

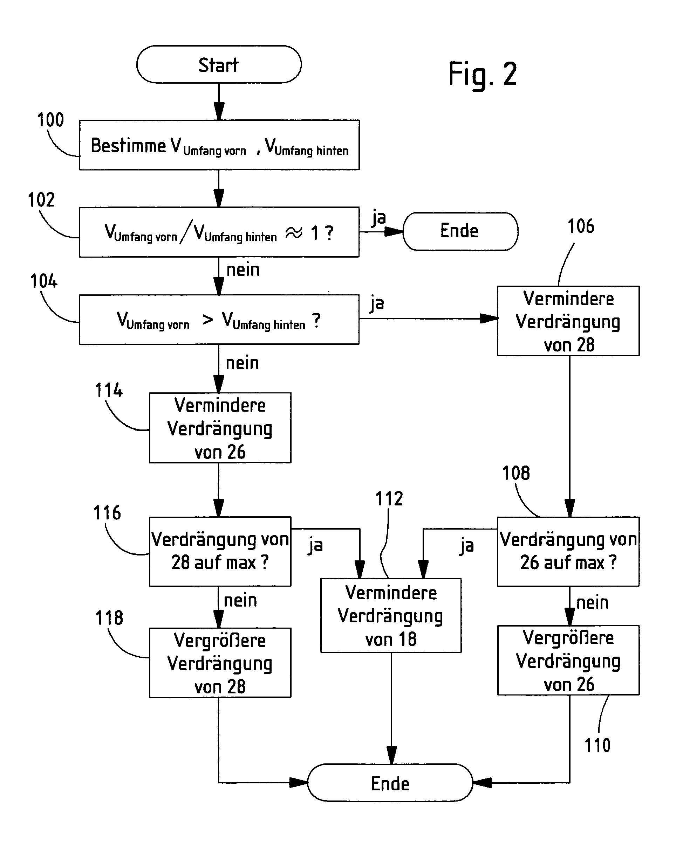

Um auch bei Betriebssituationen, in denen Schlupf an den Rädern auftritt, ein Durchdrehen der Räder 10, 12 zu verhindern, führt die Steuerungseinrichtung 40 regelmäßig eine Routine durch, wie sie in der Figur 2 dargestellt ist.

Die Steuereinrichtung 40 berechnet (Schritt 100 in Figur 2) ein Verhältnis der Umfangsgeschwindigkeit der vorderen Räder 10 zur Umfangsgeschwindigkeit der hinteren Räder 12. Ist das Verhältnis gleich 1 oder weicht davon nur unwesentlich ab (Schritt 102), sind keine weiteren Maßnahmen erforderlich.

Falls das Verhältnis der Umfangsgeschwindigkeit der vorderen Räder 10 zur Umfangsgeschwindigkeit der hinteren Räder 12 größer als 1 ist (Schritt 104), kann davon ausgegangen werden, dass die vorderen Räder 10 durchdrehen. Die Steuerungseinrichtung 40 veranlasst dann den Aktor 56 (Schritt 106), die Taumelplatte 58 in eine Stellung zu verbringen, in der die Geschwindigkeit des zweiten Hydraulikmotors 28 vermindert wird, d.h. sein Verdrängungsvolumen wird vermindert. Um in diesem Fall die Geschwindigkeit der hinteren Räder 12 konstant zu halten, prüft die Steuereinrichtung 40 zunächst ab (Schritt 108), ob das Verdrängungsvolumen des ersten Hydraulikmotors 26 schon auf dem Maximalwert ist. Falls das nicht der Fall ist, wird der Aktor 52 (Schritt 110) derart angesteuert, dass er das Verdrängungsvolumen des ersten Hydraulikmotors 26 vergrößert. Letzterer dreht sich somit langsamer und nimmt den zusätzlichen Hydraulikfluss auf, der durch die Verstellung der Taumelplatte 58 nicht mehr durch den zweiten Hydraulikmotor 28 aufgenommen werden kann. Ist die Taumelplatte 54 des ersten Hydraulikmotors 26 hingegen schon auf maximales Verdrängungsvolumen gestellt oder kann sie nicht in dem Maß verstellt werden, das erforderlich wäre, um das freiwerdende, zusätzliche Volumen aufzunehmen, veranlasst die Steuerungseinrichtung 40 den Aktor 62 (Schritt 112), die Taumelplatte 20 der Hydraulikpumpe 18 in eine Stellung zu bringen, in der sie einen in dem Maße verminderten Hydraulikfluss bereitstellt, in dem das Verdrängungsvermögen des zweiten Hydraulikmotors 28 vermindert wird. Die Taumelplatte 54 des ersten Hydraulikmotors 26 ist oder wird auf maximales Verdrängungsvolumen gestellt.

Ist das Verhältnis der Umfangsgeschwindigkeit der vorderen Räder 10 zur Umfangsgeschwindigkeit der hinteren Räder 12 hingegen im Schritt 104 kleiner als 1, kann davon ausgegangen werden, dass die hinteren Räder durchdrehen. Die Steuerungseinrichtung 40 veranlasst dann den Aktor 52 (Schritt 114), die Taumelplatte 54 in eine Stellung zu verbringen, in der die Geschwindigkeit des ersten Hydraulikmotors 26 vermindert wird. Um in diesem Fall die Geschwindigkeit der vorderen Räder 10 konstant zu halten, prüft die Steuereinrichtung 40 zunächst (Schritt 116) ab, ob das Verdrängungsvolumen des zweiten Hydraulikmotors 28 schon auf dem Maximalwert ist. Falls das nicht der Fall ist, wird der Aktor 56 (Schritt 118) derart angesteuert, dass er das Verdrängungsvolumen des zweiten Hydraulikmotors 28 vergrößert. Letzterer dreht sich somit langsamer und nimmt den zusätzlichen Hydraulikfluss auf, der durch die Verstellung der Taumelplatte 54 nicht mehr durch den ersten Hydraulikmotor 26 aufgenommen werden kann. Ist die Taumelplatte 58 des zweiten Hydraulikmotors 28 hingegen schon auf maximales Verdrängungsvolumen gestellt oder kann sie nicht in dem Maß verstellt werden, das erforderlich wäre, um das freiwerdende, zusätzliche Volumen aufzunehmen, veranlasst die Steuerungseinrichtung 40 den Aktor 62 (Schritt 112), die Taumelplatte 20 der Hydraulikpumpe 18 in eine Stellung zu bringen, in der sie einen in dem Maße verminderten Hydraulikfluss bereitstellt, in dem das Verdrängungsvermögen des ersten Hydraulikmotors 26 vermindert wird. Die Taumelplatte 58 des zweiten Hydraulikmotors 26 ist oder wird auf maximales Verdrängungsvolumen gestellt.

Diese Regelstrategie bedeutet physikalisch, dass man davon ausgeht, dass eine Situation vorliegt, in der die Räder einer Achse verminderten Bodenkontakt haben, während die Räder der anderen Achse noch hinreichenden Kontakt haben, um das verfügbare Drehmoment auf den Boden zu übertragen.

### Vorgehen bei dynamischer Bremssituation

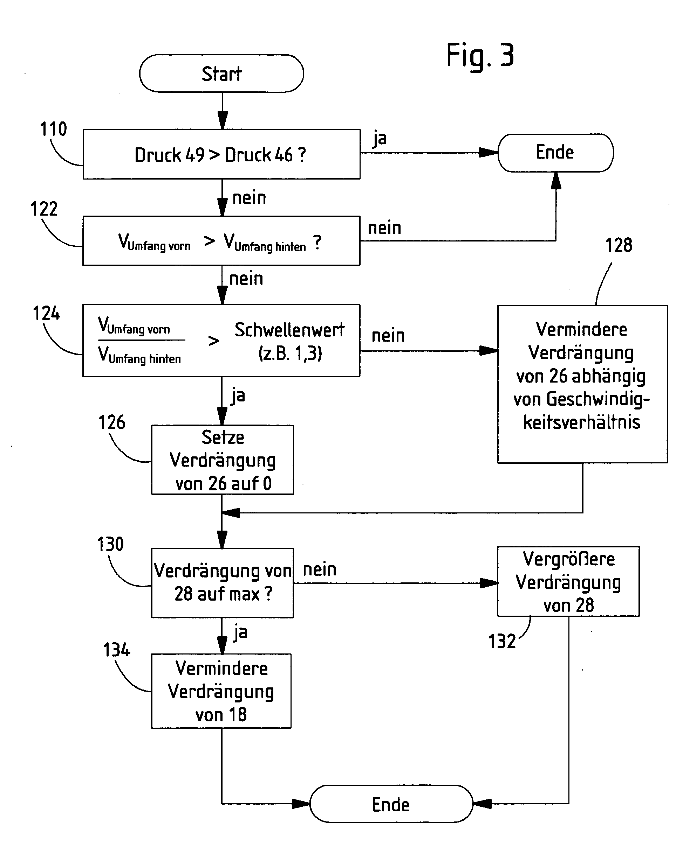

Der Betriebszustand der hinteren Räder 12 wird anhand einer Routine überwacht und gesteuert, wie sie in der Figur 3 dargestellt ist. Dabei erfasst die Steuerungseinrichtung 40 den am Einlass des ersten Hydraulikmotors 26 herrschenden Druck mittels eines weiteren Drucksensors 49. Dieser Messwert wird mit dem Druck am Auslass des Hydraulikmotors 26 verglichen (Schritt 120 in Figur 3), welcher durch den Drucksensor 46 gemessen wird. Der Vergleich erlaubt eine Bestimmung des Betriebszustands des ersten Hydraulikmotors 26. Wenn der Druck am Einlass größer als am Auslass ist, setzt der erste Hydraulikmotor 26 Leistung um und treibt das Arbeitsfahrzeug 8 voran; die Routine in Figur 3 endet dem gemäß. Ist der Druck am Einlass kleiner als am Auslass, befinden sich die hinteren Räder 10 in einer dynamischen Bremssituation, z. B. beim Bergabfahren. Um ein Durchdrehen der hinteren Räder 10 oder einen Backspin-Effekt zu vermeiden, veranlasst die Steuerungseinrichtung 40, falls sich die vorderen Räder 10 zusätzlich schneller als die hinteren Räder 12 drehen (Schritt 122), dass der Aktor 52 die Taumelplatte 54 in Richtung kleinerer Geschwindigkeit verstellt (Schritt 128). Das Maß der Verstellung hängt von der Geschwindigkeitsdifferenz ab. Falls diese einen Schwellenwert von beispielsweise 30 % überschreitet (Schritt 124), wird der Hydraulikmotor 26 ganz abgeschaltet (Schritt 126). Bei sehr kleinen Geschwindigkeiten erübrigt sich dieses Vorgehen.

Die Verstellung der Taumelplatte 54 wird wiederum durch eine Verstellung der Taumelplatte 58 ausgeglichen (Schritt 132), um die Fahrgeschwindigkeit des Arbeitsfahrzeugs 8 konstant zu halten. Falls diese sich bereits bei maximalem Verdrängungsvolumen befindet (Schritt 130), ist analog zu der in Figur 2 dargestellten Vorgehensweise das Verdrängungsvolumen der Hydraulikpumpe 18 zu vermindern (Schritt 134). Anzumerken ist, dass eine entsprechende Überwachung der vorderen Räder 10 anhand des Drucksensors 60 ebenfalls möglich wäre.

Die dargestellten Routinen werden regelmäßig durchgeführt, z. B. im Abstand einiger Millisekunden, und die erläuterten Verstellungen werden rückgängig gemacht, wenn kein Schlupf und keine unerwünschte Bremswirkung der Räder 10 oder 12 mehr vorliegt.

### Geschwindigkeitsvorgabe und Bremssystem

Um das Arbeitsfahrzeug im Gefahrenfall zügig anhalten zu können, ist eine Betriebsbremse vorgesehen, die sich jeweils aus einer drehfest mit der Achse der vorderen Räder 10 verbundenen Bremsscheibe 68 und einer Bremsbacke 72 zusammensetzt, die durch einen Bremszylinder 70 gegen die Bremsscheibe 68 gedrückt werden kann. Jedem Vorderrad 10 und auch jedem Hinterrad 12 kann eine eigene Betriebsbremse zugeordnet sein. Der Bremszylinder 70 wird hydraulisch über ein in der Fahrerkabine angeordnetes Pedal betätigt, in der Regel über einen Bremskraftverstärker. Die Betriebsbremse ist auch im Straßenfahrbetrieb wirksam, in dem die Fahrgeschwindigkeit durch den Fahrhebel 22 oder ein Gaspedal vorgebbar ist.

Zur Arretierung des Arbeitsfahrzeugs 8 im Stillstand ist weiterhin eine Parkbremse vorgesehen, die einen als Parkbremsenaktor zur Betätigung der Parkbremse dienenden Bremszylinder 74 umfasst, der betreibbar ist, eine Bremsbacke 76 gegen die Bremsscheibe 68 zu drücken. Die Bremsbacke 76 und der Bremszylinder 74 befinden sich auf der Seite der Bremsscheibe 68, die dem Bremszylinder 70 und der Bremsbacke 72 gegenüberliegt. Jedem Vorderrad 10 und auch jedem Hinterrad 12 kann eine eigene Parkbremse zugeordnet sein. Der Bremszylinder 74 ist mit der Steuerungseinrichtung 40 verbunden und wird durch sie angesteuert. Die Parkbremse wird durch den Bediener manuell mittels eines geeigneten, mit der Steuerungseinrichtung 40 verbundenen Schalters oder durch die Steuerungseinrichtung 40 selbsttätig bei Stillstand des Arbeitsfahrzeugs 8 aktiviert, um ein unerwünschtes Wegrollen zu verhindern.

Die Geschwindigkeit des Arbeitsfahrzeugs 8 wird, wie bereits erwähnt, beim Erntebetrieb mit dem Fahrhebel 22 kontrolliert, während sie beim Straßenfahrbetrieb ebenfalls durch den Fahrhebel 22 oder ein Gaspedal vorgegeben wird. Im Straßenfahrbetrieb, der durch einen Ernte/Straßenfahrbetriebsschalter auswählbar ist oder anhand des Betriebszustands von Arbeitselementen des Arbeitsfahrzeugs 8 selbsttätig erkannt werden kann, veranlasst die Steuerungseinrichtung 40 eine Motorsteuerung 64 des Hauptmotors 14, die Drehzahl des Hauptmotors 14 zu vermindern, um den Betriebsstoffverbrauch zu reduzieren.

Die Steuerung der Geschwindigkeit des Arbeitsfahrzeugs 8 erfolgt zumindest beim Erntebetrieb, ggf. auch im Straßenfahrbetrieb, ausschließlich durch den Fahrhebel 22. Falls im Straßenfahrbetrieb ein Gaspedal zur Geschwindigkeitsvorgabe verwendet wird, ist ihm ebenfalls ein mit der Steuerungseinrichtung 40 verbundener Sensor zur Erfassung seiner Position zugeordnet, entsprechend dem Fahrhebelstellungssensor 48, so dass das Gaspedal den Fahrhebel 22 ersetzt, während die übrigen Antriebselemente wie im Erntebetrieb durch die Steuerungseinrichtung 40 kontrolliert werden.

Eine gewünschte Verzögerung des Arbeitsfahrzeugs 8 erfolgt, falls der Fahrhebel 22 bzw. das Gaspedal in Richtung auf seine Neutralstellung bewegt wird, durch die Bremswirkung der Hydraulikmotoren 26, 28. Diese Bremswirkung ist durch Parameter der Hydraulikmotoren 26, 28 begrenzt. Falls der Fahrhebel 22 oder das Gaspedal relativ schnell in seine Neutralstellung bewegt wird, um das Arbeitsfahrzeug 8 beispielsweise im Notfall relativ schnell abstoppen zu können, wird eine vergrößerte Bremswirkung erzielt, indem die Steuerung 40 den bzw. die Bremszylinder 74 der Parkbremse aktiviert. Dadurch lässt sich das Arbeitsfahrzeug 8 relativ schnell anhalten. Eine Aktivierung des oder der Bremszylinder 74 der Parkbremse erfolgt somit, wenn die Zeitableitung des Positionssignals des Fahrhebelstellungssensors 48 (bzw. eines entsprechenden Sensors zur Erfassung der Position des Gaspedals) über einem bestimmten Schwellenwert liegt. Vorzugsweise wird der Bremszylinder 74 über ein Proportionalventil 77 angesteuert, so dass auch Zwischenwerte der Bremswirkung erzielbar sind.

## Patentansprüche

1. Antriebssystem eines Arbeitsfahrzeugs (8), mit einem Hauptmotor (14), der mit einer Hydraulikpumpe (18) in Antriebsverbindung steht, die ein mittels eines Aktors (62) veränderbares Verdrängungsvolumen aufweist und mit einem ersten Hydraulikmotor (26), der mit wenigstens einem im Eingriff mit dem Erdboden befindlichen Rad (12) in Antriebsverbindung steht und dessen Verdrängungsvolumen durch einen Aktor (52) veränderbar ist, und mit einem zweiten Hydraulikmotor (28) verbunden ist, der mit wenigstens einem im Eingriff mit dem Erdboden befindlichen Rad (10) einer anderen Achse in Antriebsverbindung steht und dessen Verdrängungsvolumen durch einen Aktor (56) veränderbar ist, wobei die Aktoren (52, 56, 62) mit einer Steuerungseinrichtung (40) verbunden sind, die auch mit einem Sensor (48) zur Erfassung der Position einer Geschwindigkeitsvorgabeeinrichtung, insbesondere eines Fahrhebels (22), verbunden ist, und die Steuerungseinrichtung (40) betreibbar ist, die Aktoren (52, 56, 62) entsprechend einer Geschwindigkeitsvorgabe der Geschwindigkeitsvorgabeeinrichtung einzustellen und bei einer erkannten unerwünschten Betriebsbedingung an mindestens einem der Räder (10, 12) den dem jeweiligen Rad (10, 12) zugeordneten Aktor (52, 56) in Richtung verminderten Verdrängungsvolumens des Hydraulikmotors (26, 28) zu verstellen, um die Betriebsbedingung durch Verminderung der Drehzahl des Rads (10, 12) aufzuheben und zusätzlich den Aktor (56, 52) des jeweils anderen Hydraulikmotors (56, 52) und/oder den Aktor (62) der Hydraulikpumpe (18) zum Konstanthalten der Fahrgeschwindigkeit zu verstellen, wobei die Steuerungseinrichtung (40) betreibbar ist, den Aktor (56, 52) des jeweils anderen Hydraulikmotors (28, 26) in Richtung auf eine Position größeren Verdrängungsvolumens bis ggf. zu einem maximalen Verdrängungsvolumen zu verstellen **dadurch gekennzeichnet, daß** die steuerungseinrichtung betreibbar ist, nur dann, falls diese Verstellung nicht zum Ausgleich der Verstellung des Verdrängungsvolumens des Hydraulikmotors (26, 28) des Rads (10, 12) hinreicht, an dem die unerwünschte Betriebsbedingung vorliegt, den Aktor (62) der Hydraulikpumpe (18) in Richtung verminderten Verdrängungsvolumens zu verstellen.

2. Antriebssystem nach Anspruch 1, **dadurch gekennzeichnet, dass** die unerwünschte Betriebsbedingung Schlupf ist und anhand eines Vergleichs der gemessenen Drehzahlen der Räder (10, 12) erkannt wird.

3. Antriebssystem nach Anspruch 1 oder 2, **dadurch gekennzeichnet, dass** die unerwünschte Betriebsbedingung eine Bremswirkung des Hydraulikmotors ist und anhand eines Druckunterschiedes an seinem Ein- und Auslass erkannt wird.

4. Antriebssystem nach einem der vorhergehenden Ansprüche, **dadurch gekennzeichnet, dass** die Steuerungseinrichtung (40) mit einem Sensor (48) zur Erfassung der Position einer Geschwindigkeitsvorgabeeinrichtung, insbesondere eines Fahrhebels (22), verbunden ist, dass die Steuerungseinrichtung (40) betreibbar ist, den Aktor (62) entsprechend einer Geschwindigkeitsvorgabe der Geschwindigkeitsvorgabeeinrichtung einzustellen, dass ein Rad (10) mit einer Parkbremse in Antriebsverbindung steht, die durch einen Parkbremsenaktor betätigbar ist, und dass die Steuerungseinrichtung (40) mit dem Parkbremsenaktor verbunden und betreibbar ist, die Parkbremse zu aktivieren, falls die Geschwindigkeitsvorgabeeinrichtung mit einer Geschwindigkeit in Richtung auf ihre Neutralstellung bewegt wird, die über einem Schwellenwert liegt.

5. Antriebssystem nach Anspruch 4, **dadurch gekennzeichnet, dass** der Parkbremsenaktor über ein Proportionalventil (77) angesteuert wird.

6. Erntemaschine, insbesondere Mähdrescher, Baumwollpflücker oder Feldhäcksler, mit einem Antriebssystem nach einem der vorhergehenden Ansprüche.

## Claims

1. Drive system of a work vehicle (8), comprising a main motor (14), which is drive-connected to a hydraulic pump (18) having a displacement volume which is variable by means of an actuator (62), and comprising a first hydraulic motor (26), which is drive-connected to at least one wheel (12) in engagement with the ground and the displacement volume of which is variable by an actuator (52), and comprising a second hydraulic motor (28), which is drive-connected to at least one wheel (10), of another axle, in engagement with the ground and the displacement volume of which is variable by an actuator (56), the actuators (52, 56, 62) being connected to a control mechanism (40), which is also connected to a sensor (48) for detecting the position of a speed presetting device, in particular a throttle lever (22), and the control mechanism (40) can be operated to set the actuators (52, 56, 62) in accordance with a speed preset of the speed presetting device and, if an undesirable operating condition is recognized at at least one of the wheels (10, 12), to adjust the actuator (52, 56) assigned to the respective wheel (10, 12) in the direction of reduced displacement volume of the hydraulic motor (26, 28) in order to remove the operating condition by reducing the rotation speed of the wheel (10, 12) and, in addition, to adjust the actuator (56, 52) of the respectively other hydraulic motor (56, 52) and/or the actuator (62) of the hydraulic pump (18) so as to keep the travel speed constant, wherein the control mechanism (40) can be operated to adjust the actuator (56, 52) of the respectively other hydraulic motor (28, 26) in the direction of a position of greater displacement volume up to, where necessary, a maximum displacement volume, **characterized in that** the control mechanism can be operated, only if this adjustment is not sufficient to compensate for the adjustment of the displacement volume of the hydraulic motor (26, 28) of the wheel (10, 12) at which the undesirable operating condition is present, to adjust the actuator (62) of the hydraulic pump (18) in the direction of reduced displacement volume.

2. Drive system according to Claim 1, **characterized in that** the undesirable operating condition is wheel slip and is recognized on the basis of a comparison of the measured rotation speeds of the wheels (10, 12).

3. Drive system according to Claim 1 or 2, **characterized in that** the undesirable operating condition is a braking effect of the hydraulic motor and is recognized on the basis of a pressure differential at its inlet and outlet.

4. Drive system according to one of the preceding claims, **characterized in that** the control mechanism (40) is connected to a sensor (48) for detecting the position of a speed presetting device, in particular a throttle lever (22), **in that** the control mechanism (40) can be operated to set the actuator (62) in accordance with a speed preset of the speed presetting device, **in that** a wheel (10) is drive-connected to a parking brake which can be actuated by a parking brake actuator, and **in that** the control mechanism (40) is connected to the parking brake actuator and can be operated to activate the parking brake if the speed presetting device is moved in the direction of its neutral setting at a speed exceeding a threshold value.

5. Drive system according to Claim 4, **characterized in that** the parking brake actuator is controlled via a proportional valve (77).

6. Harvesting machine, in particular a combine harvester, cotton picker or forage harvester, comprising a drive system according to one of the preceding claims.

## Revendications

1. Système d'entraînement pour un véhicule de travail (8), comportant un moteur principal (14) qui est relié à une pompe hydraulique (18) à cylindrée variable par l'intermédiaire d'un actionneur (62), et comportant un premier moteur hydraulique (26) à cylindrée variable par l'intermédiaire d'un actionneur (52) et relié à au moins une roue (12) en prise avec le sol, et comportant un deuxième moteur hydraulique (28) à cylindrée variable par l'intermédiaire d'un actionneur (56) et relié à au moins une roue (10) en prise avec le sol, les actionneurs (52, 56, 62) étant reliés à un dispositif de commande (40), qui est également relié à un capteur (48) destiné à détecter la position d'un dispositif de définition de la vitesse, en particulier un levier de commande (22), et le dispositif de commande (40) pouvant être utilisé pour régler les actionneurs (52, 56, 62) en fonction d'une vitesse du dispositif de définition de la vitesse et, chaque fois qu'une condition de fonctionnement indésirable est détectée sur au moins une des roues (10, 12), pour déplacer l'actionneur (52, 56), associé à la roue concernée (10, 12), dans le sens d'une diminution de la cylindrée du moteur hydraulique (26, 28), en vue de supprimer la condition de fonctionnement par une diminution de la vitesse de rotation de la roue (10, 12) et de déplacer, de surcroît, l'actionneur (56, 52) de l'autre moteur hydraulique (56, 52) et/ou l'actionneur (62) de la pompe hydraulique (18) pour maintenir la vitesse de déplacement à une valeur constante, le dispositif de commande (40) pouvant être utilisé pour déplacer l'actionneur (56, 52) de l'autre moteur hydraulique (28, 26) vers une position définissant une plus grande cylindrée et, le cas échéant, jusqu'à une cylindrée maximale, **caractérisé en ce que**, uniquement lorsque ce déplacement ne suffit pas à compenser le réglage de la cylindrée du moteur hydraulique (26, 28) de la roue (10, 12) sur laquelle est détectée la condition de fonctionnement indésirable, le système de commande peut être utilisé pour déplacer l'actionneur (62) de la pompe hydraulique (18) dans le sens d'une diminution de la cylindrée.

2. Système d'entraînement selon la revendication 1, **caractérisé en ce que** la condition de fonctionnement indésirable est un patinage et est détectée à l'appui d'une comparaison des vitesses de rotation mesurées sur les roues (10, 12).

3. Système d'entraînement selon la revendication 1 ou 2, **caractérisé en ce que** la condition de fonctionnement indésirable est un effet de freinage du moteur hydraulique et est détectée à l'appui d'une différence de pression au niveau de son entrée et de sa sortie.

4. Système d'entraînement selon l'une quelconque des revendications précédentes, **caractérisé en ce que** le dispositif de commande (40) est relié à un capteur (48) destiné à détecter la position d'un dispositif de définition de la vitesse, en particulier un levier de commande (22), **en ce que** le dispositif de commande (40) peut être utilisé pour régler l'actionneur (62) en fonction d'une vitesse du dispositif de définition de la vitesse, et **en ce qu'**une roue (10) est reliée à un frein de stationnement, qui est apte à être activé par un actionneur de frein, et **en ce que** le dispositif de commande (40) est relié à l'actionneur du frein de stationnement et peut être utilisé pour activer le frein de stationnement lorsque le dispositif de définition de la vitesse est amené vers sa position neutre avec une vitesse supérieure à une valeur seuil.

5. Système d'entraînement selon la revendication 4, **caractérisé en ce que** l'actionneur du frein de stationnement est activé par l'intermédiaire d'une vanne proportionnelle (77).

6. Machine de récolte, en particulier moissonneuse-batteuse, cueilleur de coton ou ensileuse, comportant un système d'entraînement selon une des revendications précédentes.
